# EUROPÄISCHE PATENTSCHRIFT

(11) **EP 0 921 968 B1**
(45) Veröffentlichungstag und Bekanntmachung des Hinweises auf die Patenterteilung: **14.11.2001**
(21) Anmeldenummer: 97934553.5
(22) Anmeldetag: 29.07.1997
(51) Int. Cl.: B60S 1/08

(54) **SCHEIBENWISCHVORRICHTUNG**
WINDSHIELD WIPER DEVICE
DISPOSITIF ESSUIE-GLACE

(30) Priorität: 27.08.1996 DE 19634559
(43) Veröffentlichungstag der Anmeldung: 16.06.1999
(73) Patentinhaber: Valeo Auto-Electric Wischer und Motoren GmbH, 74321 Bietigheim-Bissingen (DE)
(72) Erfinder: HÖGLER, Eberhard, D-74391 Erligheim (DE)
(74) Vertreter: Dreiss, Fuhlendorf, Steimle & Becker
(86) Internationale Anmeldenummer: EP9704115
(87) Internationale Veröffentlichungsnummer: WO9808717

(56) Entgegenhaltungen:
- WO-A-91/19631
- DE-A- 2 918 658
- DE-A- 2 922 160
- DE-A- 4 104 565
- DE-A- 4 431 699
- FR-A- 2 736 023

## Beschreibung

Die Erfindung betrifft eine Scheibenwischvorrichtung mit den Merkmalen des Oberbegriffs des Anspruchs 1 oder des Anspruchs 2.

Eine aus der DE-OS 44 31 699 bekannte Wischvorrichtung umfaßt eine Einrichtung zur Erfassung der Zeit, die der Wischarm für einen halben Wischzyklus, d.h. von Endlage bis zur Umkehrposition benötigt. Ferner ist eine Zeitvorgabeanordnung vorgesehen, die eine maximal zulässige Zeit für einen halben Wischzyklus vorgibt. In einem Vergleicher wird die maximal zulässige Zeit mit der tatsächlich ermittelten Zeit verglichen und bei Zeitüberschreitung ein Wischvorgang in die entgegengesetzte Wischrichtung ausgelöst. Zwar ist es mit einer derartigen Anordnung möglich, die Drehrichtung des Motors zu reversieren, wenn der Wischarm für einen halben Wischzyklus eine größere Zeitspanne benötigt, aber es wird als nachteilig angesehen, daß bis zum reversieren des Elektromotors die maximal zulässige Zeit verstreichen muß. Dies führt dazu, daß der Elektromotor in diesem Zeitraum gegen die Blockierung läuft und überhitzt. Insbesondere bei Blockierungen nahe der Parkstellung des Wischarmes führt dies zu besonders schwerwiegenden Überlastungen des Motors, so daß Beschädigungen nicht ausgeschlossen werden können. Aus der DE-A-29 22 160 ist eine Wischanlage gemäß Oberbegriff von Anspruch 2 mit einem über ein Schaltelement gespeisten Motor zum Antrieb der Wischer bekannt. Die Anlage weist eine Steuereinheit auf, die in einer Auswerteschaltung die Winkelgeschwindigkeit des Motors verarbeitet.

Aus der den nächstkommenden Stand der Technik bildenden DE-A-29 18 658 ist eine Wischanlage gemäß Oberbegriff von Anspruch 1 mit einem in Abhängigkeit von der Schaltstellung eines Betriebsschalters im Dauerbetrieb oder im Intervallbetrieb ansteuerbaren elektrischen Motor zum Antrieb wenigstens eines Wischblattes bekannt.

Aufgabe der vorliegenden Erfindung ist es daher, eine Scheibenwischvorrichtung bereitzustellen, welche bei Blockierungen des Wischarmes ein frühzeitiges Reversieren des Elektromotors erlaubt und darüber hinaus mit geringem Aufwand an verschiedene Anforderungen und Problemstellungen angepaßt werden kann, so daß vielfältige Sonderfunktionen, wie beispielsweise Wischfeldsteuerung möglich ist. Eine weitere Aufgabe der Erfindung ist es, die Belastung von Antriebselementen, die sich üblicherweise zwischen Motor und Wischarm befinden, so gering wie möglich zu gestalten, damit diese kleinbauend sowie mit geringem Gewicht gestaltet werden können. Ferner soll der Wischwinkel bzw. das Wischfeld an unterschiedliche Fahrzeuggeschwindigkeiten anpassbar sein.

Diese Aufgabe wird mit den Merkmalen des Patentanspruchs 1 oder des Patentanspruchs 2 gelöst.

Dabei ist vorgesehen, daß eine in der Steuereinheit gespeicherte Parkposition und/oder Umkehrposition des Wischarmes an eine bestimmte Fahrzeuggeschwindigkeit angepaßt ist. Damit wird es ermöglicht, den Wischwinkel bzw. das Wischfeld an unterschiedliche Fahrzeuggeschwindigkeiten anzupassen, ohne auf ein vorgegebenes festes Wischfeld angewiesen zu sein.

Besonders vorteilhaft ist, daß die erfindungsgemäße Vorrichtung schnell auf ein Absinken der Motordrehzahl unterhalb einer bestimmten Minimaldrehzahl reagiert und den Elektromotor abschaltet beziehungsweise reversiert. Damit ergibt sich ferner der Vorteil, daß der Elektromotor in Abhängigkeit von der entgegenwirkenden Last gesteuert wird. Ein Vergleich einer maximal zulässigen Zykluszeit mit einer tatsächlichen Zykluszeit ist somit nicht notwendig, so daß auch die betreffenden Bauelemente entfallen können.

In Weiterbildung der Erfindung ist es vorgesehen, daß die Steuereinheit eine Blockierposition erfaßt und der Motor vor Erreichen der Blockierposition reversiert wird. Mit einer derartigen, quasi lernfähigen Steuereinheit wird eine Überlastung der zwischengeschalteten Antriebselemente in vorteilhafter Weise vermieden.

Ferner ist es in Weiterbildung der Erfindung vorgesehen, daß die Steuereinheit Motordrehwinkelsignale erfaßt, so daß dem Elektromotor vor Erreichen von Drehwinkeln, welche einer Wischerendlage oder Parkposition entsprechen, Drehgeschwindigkeitsänderungssignale zugeführt werden. Weil das Drehgeschwindigkeitsänderungssignal bei einem bevorzugten Ausführungsbeispiel derart ausgelegt ist, daß es zu einer Drehgeschwindigkeitsverminderung des Elektromotors führt, wird auch mit diesen Merkmalen die Beanspruchung von zwischengeschalteten Antriebselementen verringert. Der Wischarm fährt somit quasi gedämpft in die Endlagen beziehungsweise in die Parkposition.

Zusätzliche Weiterbildungen der Erfindung gehen aus den Unteransprüchen zusammen mit der Beschreibung und der Zeichnung hervor. Die Erfindung wird nachstehend anhand von Ausführungsbeispielen, die in der Zeichnung dargestellt sind, näher beschrieben. Dabei zeigt:
- Fig. 1: ein schematisches Blockschaltbild der Scheibenwischvorrichtung;
- Fig. 2: ein Flußdiagramm zur Erläuterung des Signalflusses in der Scheibenwischvorrichtung;
- Fig. 3: ein Flußdiagramm eines abgewandelten Ausführungsbeispieles mit zusätzlicher Motor-Drehrichtungserkennung;
- Fig. 4: Flußdiagramm eines Ausführungsbeispieles mit fahrzeuggeschwindigkeitsgekoppelter Wischfeldbeeinflussung;
- Fig. 5: eine Prinzipskizze zur Wischfeldbeeinflussung gemäß Fig. 4.

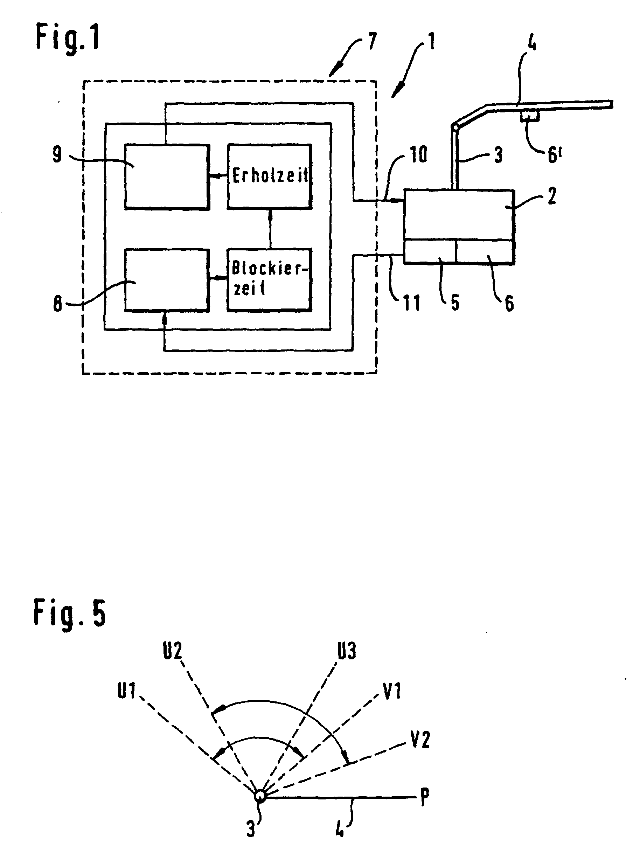

Eine erfindungsgemäße Scheibenwischvorrichtung 1 umfaßt gemäß Fig. 1 mindestens einen in seiner Drehrichtung veränderbaren Elektromotor 2 sowie mindestens einen, an einer Motorwelle 3 angelenkten Wischarm 4. Der Elektromotor kann mit Hilfe von Puls-Weiten-Modulation (PMW) in seiner Geschwindigkeit verändert und dadurch beispielsweise vor dem Erreichen von Umkehrpunkten abgebremst werden. An dem Elektromotor 2 sind Sensoren 5,6 zum Abgreifen der Motordrehzahl bzw. zum Abgreifen des Drehwinkels der Motorwelle 3 vorgesehen. Es kann noch ein Sensor 6' zur Abfrage der dargestellten Parkposition des Wischarmes 4 vorgesehen sein. Als Sensoren 5,6,6'kommen vorzugsweise Hallelemente zum Einsatz. Die Scheibenwischvorrichtung 1 umfaßt ferner eine Steuereinheit 7, beispielsweise mit Prozessoren, welche eine mit den Sensoren 5,6 zusammenwirkende Einrichtung 8 zum Erfassen der Motordrehzahl aufweist. Die Steuereinheit (7) erlaubt es, den Elektromotor lastabhängig zu steuern. Innerhalb der Steuereinheit 7 kann eine Anordnung zur Drehrichtungskontrolle 9 vorgesehen sein. Die Drehrichtungskontrolle 9 ist jedoch nicht zwingend notwendig, so daß auch Ausführungsformen ohne derartige Anordnungen denkbar sind. Der in Fig. 1 gezeigten Vorrichtung liegt der folgende, funktionale Zusammenhang zugrunde. Einerseits erhält der Elektromotor 2 von der Steuereinheit 7 Schaltsignale 10, welche dazu dienen, den Elektromotor 2 ein- bzw. auszuschalten oder aber in seiner Drehrichtung zu reversieren. Die Schaltsignale 10 sind in der Figur schematisch dargestellt. Ferner speisen die dem Elektromotor 2 zugeordneten Sensoren 5,6 Betriebsinformationen hinsichtlich Drehzahl, Drehgeschwindigkeit und Drehwinkel der Motorwelle 3 als Betriebssignale 11 in die Steuereinheit 7 ein. Die Einrichtung 8 zur Drehzahlerfassung bestimmt aus den Betriebssignalen 11 permanent die Betriebsdrehzahl des Elektromotors 2. Sobald die Betriebsdrehzahl eine vorgegebene Minimaldrehzahl über einen vorgegebenen, meist geringen Zeitraum von beispielsweise 500 ms unterschreitet, wird der Elektromotor abgeschaltet, um ein Überhitzen des Elektromotors zu verhindern. Nach einer, bestimmten Erholzeit, die frei wählbar ist, erhält der Elektromotor 2 von der Steuereinheit 7 ein Schaltsignal 10 zur Drehrichtungsumkehr oder aber wenn beispielsweise eine Anordnung zur Drehrichtungskontrolle 9 vorgesehen ist und diese wie nachstehend beschrieben wird anspricht ein Schaltsignal 10, welches den Elektromotor 2 weiterhin in gleicher Drehrichtung freischaltet.

Es ist grundsätzlich auch möglich, den Elektromotor unmittelbar zu reversieren, ohne eine Erholzeit zur Abkühlung vorzusehen. Bei dieser Betriebsweise kommt es zu einer geringfügig höheren thermischen Belastung.

Ganz grundsätzlich können beliebige, unterschiedliche Betriebssignale 11 in die Steuereinheit 7 eingespeist werden können, ohne den Grundgedanken der Erfindung zu verlassen. So kann es beispielsweise vorgesehen sein, daß der Sensor 6' die Parkposition des Wischarmes 4 überwacht und eine entsprechende Meldung als Betriebssignal 11 an die Steuereinheit 7 meldet, um zusätzliche Eingriffs- und Steuermöglichkeiten zu schaffen.

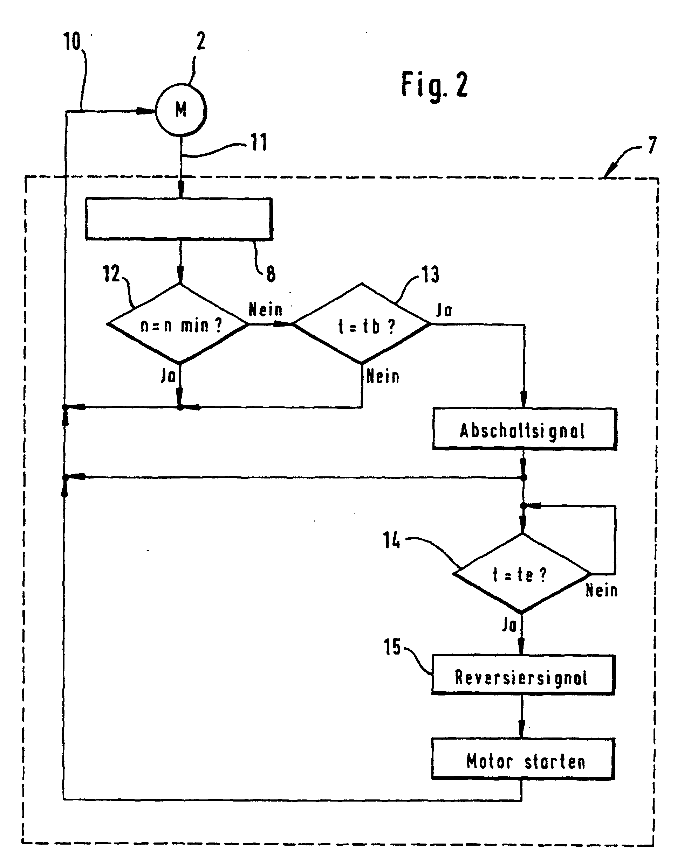

Die Funktion der Vorrichtung 1 wird nachstehend anhand des in Fig. 2 dargestellten Flußdiagramms näher erläutert. Fig. 2 erläutert insbesondere die innerhalb der Steuereinheit 7 ablaufenden Vorgänge. Die Steuereinheit 7 erhält von dem Elektromotor 2, vorzugsweise in Impulsform, Betriebssignale 11, aus denen innerhalb der Einrichtung 8 zur Drehzahlerfassung die momentane Betriebsdrehzahl bestimmt bzw. berechnet wird. In einem nachgeschalteten Vergleicher 12 wird die Betriebsdrehzahl einer vorbestimmten Minimaldrehzahl (n min) gegenübergestellt und entschieden, ob die Betriebsdrehzahl den Minimalwert unterschreitet. Wenn die Betriebsdrehzahl oberhalb oder gleich der Minimaldrehzahl liegt, erfolgt keine Änderung der Schaltsignale 10 für den Elektromotor 2. Sobald die Betriebsdrehzahl allerdings die Minimaldrehzahl unterschreitet, wird mittels Zeiterfassung 13 überwacht, ob dies für einen bestimmten Zeitraum von beispielsweise 500 ms, ein Zeitraum der hier als Blockierzeit (tb) bezeichnet werden soll, vorliegt. Sofern die Drehzahlabweichung nicht über die gesamte Blockierzeit gegeben ist, erfolgt keine Änderung des Schaltsignals 10 für den Elektromotor 2. Wenn aber das Unterschreiten der Soll-Drehzahl über den gesamten Blockierzeitraum tb gegeben ist, geht von der Steuereinheit 7 ein Schaltsignal 10 zum Abschalten des Elektromotors 2 aus. In einer sich hieran anschließenden Zeitspanne, die in einer zweiten Zeiterfassung 14 überwacht wird und als Erholzeitraum te bezeichnet werden soll, bleibt der Motor ausgeschaltet. Dies wird von der Zeiterfassung 14 mit Hilfe einer Überwachungsroutine 15 sichergestellt. Innerhalb der Erholzeit te kühlt der Motor ab, so daß er gefahrlos wieder in Betrieb genommen werden kann. Nach Ablauf der Erholzeit geht von der Steuereinheit 7 ein Schaltsignal 10 aus, mit dem der Elektromotor 2 in umgekehrter Drehrichtung in Betrieb genommen wird. Wie obige Erläuterungen zeigen, erfolgt das Reversieren des Elektromotors 2 mit dem Reversiersignal 15 unabhängig davon, welche Drehrichtung der Elektromotor 2 vor dem Abschaltvorgang besaß. Weil in jedem Falle eine Drehrichtungsumkehr des Elektromotors 2 durchgeführt werden soll, kann bei dieser Vorgehensweise auf eine Drehrichtungskontrolle 9 verzichtet werden.

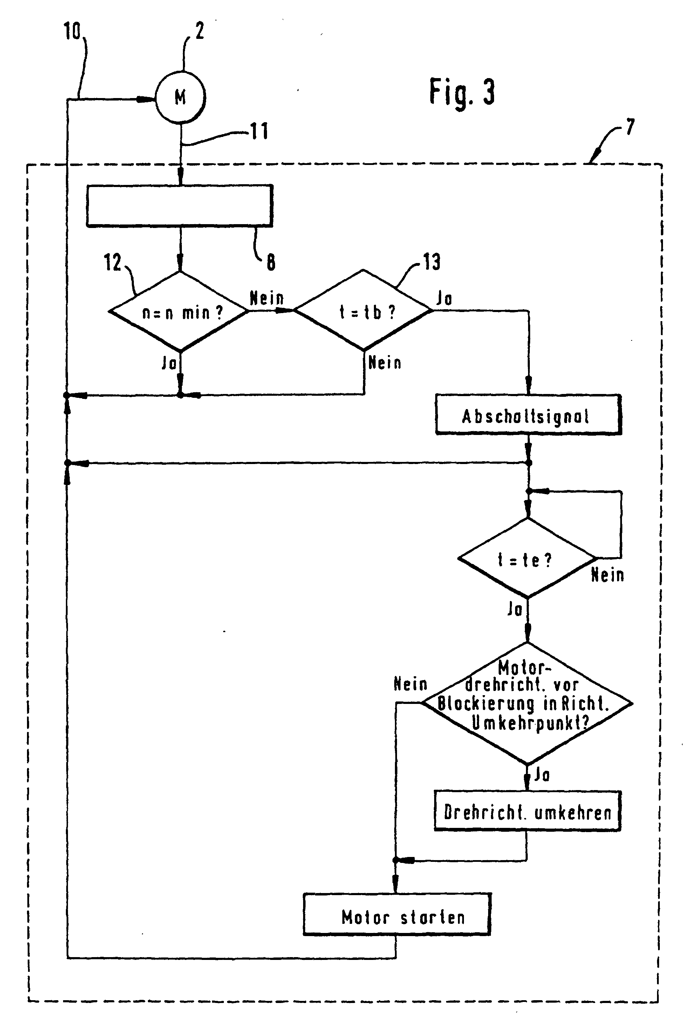

Im Unterschied dazu erfolgt bei der sonst gleichen Figur 3 eine Abfrage, welche Drehrichtung der Elektromotor 2 vor dem Abschaltvorgang besaß. Eine Drehrichtungsumkehr erfolgt hierbei nur, wenn die Einrichtung 9 zur Drehrichtungskontrolle festgestellt hat, daß der Elektromotor 2 den Wischarm 4 vor der Abschaltung aus der Parkposition entfernt hat. Zur Ermittlung dieses Betriebszustandes kann beispielsweise auch der Sensor 6' herangezogen werden. Ergibt die Drehrichtungskontrolle jedoch, daß der Elektromotor 2 den Wischarm 4 in die Parkposition bewegte, bevor die Blockierung auftrat, wird der Elektromotor 2 ohne Drehrichtungsumkehr gestartet. Folglich wird der Wischarm in Richtung auf die Parkstellung bewegt. Die übrigen Verfahrensschritte entsprechen der Fig. 2.

Bei einer abgewandelten Ausführungsform wird mit Hilfe eines Reglers zusätzlich eine Betriebsdrehzahlregelung zur Anpassung an die Solldrehzahl vorgenommen. Hierzu wird das Betriebssignal 11, das einer Betriebsdrehzahl entspricht, mit einer vorgebbaren Solldrehzahl verglichen und bei überschreiten der Solldrehzahl ein Schaltsignal 10 zur Absenkung der Betriebsdrehzahl abgegeben. Ist aber die Betriebsdrehzahl oberhalb der Minimaldrehzahl und unterhalb der Solldrehzahl so erfolgt ein Schaltsignal 10 zur Drehzahlerhöhung. In dem Drehzahlbereich unterhalb der Minimaldrehzahl erfolgt ggf. ein Eingriff der Steuereinheit 7 durch abschalten und/oder reversieren.

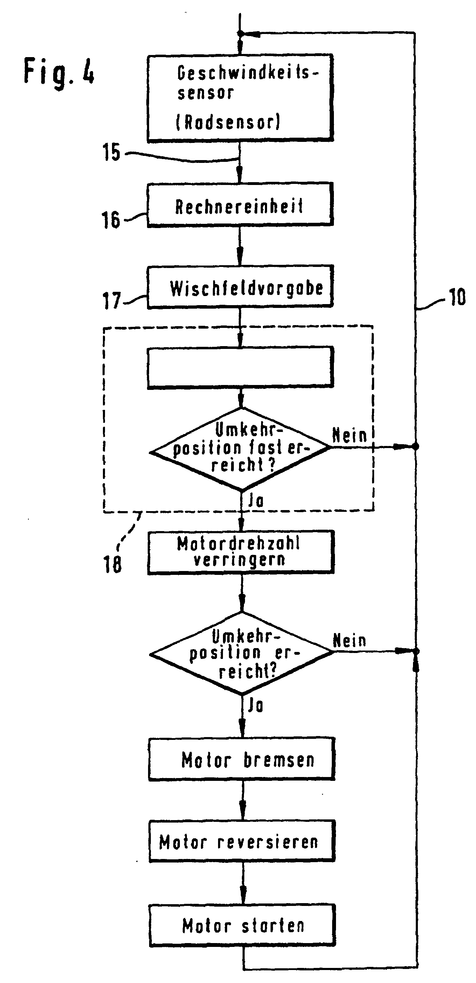

In Fig. 4 ist ein Teil eines Flußdiagramms einer Ausführung dargestellt, bei der zusätzlich als eingehendes Betriebssignal 11 für die Steuereinheit 7 Fahrzeuggeschwindigkeitssignale 15 vorgesehen sind. Beispielsweise ist jeder Fahrzeuggeschwindigkeit eine bestimmte Wischfeldgröße zugeordnet, die durch jeweils eine äußere und eine innere Umkehrposition für den Wischarm 4 vorgegeben ist. Eine entsprechende Darstellung eines Wischfeldes mit einer Parkpostion P, äußeren Umkehrpositionen U1, U2, U3 sowie mit inneren Umkehrpositionen V1 und V2 zeigt Figur 5. Als besonders vorteilhaft wird es angesehen, wenn die Wischfeldgröße bei höheren Geschwindigkeiten reduziert wird, um die notwendigen Betätigungskräfte für den Wischarm zu reduzieren. Dies liegt darin begründet, daß der Wischarm bei geringeren Wischwinkeln dem Fahrtwind eine geringere Angriffsfläche bietet. So könnte höheren Fahrgeschwindigkeiten beispielsweise ein Wischwinkel zugeordnet werden, welcher einen geringeren Bereich zwischen U1-V1 bzw. U2-V2 abdeckt. Zur Beeinflussung des Wischfeldes ist es nun vorgesehen, zunächst die Fahrzeuggeschwindigkeit mittels der Geschwindigkeitssignale 15 in einer Rechnereinheit 16 zu bestimmen. Innerhalb der Steuereinheit 7 wird sodann in einer Wischfeldvorgabe 17 das zugeordnete Wischfeld mit den äußeren und inneren Umkehrpositionen U und V ermittelt. Die nun folgenden Schritte laufen wie folgt ab. Mit Hilfe der Positionserkennungseinrichtung 18, welche mit Betriebssignalen 11 des Sensors 5 arbeitet, wird permanent überwacht, ob eine Umkehrposition in nächster Nähe ist. Wenn dies nicht der Fall ist, erfolgt keine Änderung des Schaltsignales 10 für den Elektromotor 2. Wenn allerdings eine Umkehrposition U oder V des Wischarmes 4 nahezu erreicht ist, wird eine Drehgeschwindigkeitsverringerung des Elektromotors 2 vorgenommen, was mit Hilfe eines entsprechend gesteuerten Schaltsignales 10 der Steuereinheit 7 erfolgt. Infolgedessen bremst der Elektromotor 2. In einem weiteren Schritt 18 wird nun die Drehrichtung des Elektromotors 2 reversiert und der Wischarm 4 in die Gegenrichtung bewegt. Mit diesen Maßnahmen wird es ermöglicht, die mechanische Beanspruchung der zwischen Motor 2 und Wischarm 4 geschalteten Antriebselementen, beispielsweise der Motorwelle 3 möglichst gering zu halten, weil die Beanspruchung an den Umkehrpunkten mit geringerer Last erfolgt. Mit geringerer Beanspruchung kann die gesamte Wischvorrichtung kleiner und leichter dimensioniert werden, was als besonders vorteilhaft angesehen wird.

Es versteht sich, daß zur Variierung des Wischfeldes nicht nur die Fahrzeuggeschwindigkeit herangezogen werden kann. Es ist insbesondere denkbar, das Wischfeld individuell an die jeweiligen Fahrerbedürfnisse und Vorgaben anzupassen oder an eine bestimmte Blockierung des Wischarmes, so daß auch bei Blockierungen des Wischarmes zumindest eingeschränkter Wischbetrieb ermöglicht wird. Es sind also vielfältige Abwandlungen der Erfindung denkbar, ohne den Grundgedanken der Erfindung zu verlassen. Allen Abwandlungen ist aber gemeinsam, daß mit Ihnen der Vorteil verbunden ist, die Motordrehzahl lastabhängig und Batteriespannungsunabhängig zu regeln. Es ergibt sich ein besonders gleichmäßiger Wischvorgang, weil ein Absinken der Versorgungsspannung keine Beeinträchtigung des Wischvorganges infolge Drehzahlverringerung des Elektromotors nach sich zieht.

## Patentansprüche

1. Scheibenwischvorrichtung mit mindestens einem in seiner Drehrichtung änderbaren Elektromotor (2) und mindestens einem Wischarm (4), wobei eine Steuereinheit (7) zum lastabhängigen Steuern des Elektromotors (2) vorgesehen ist, **dadurch gekennzeichnet, daß** eine in der Steuereinheit (7) gespeicherte Parkposition des Wischarmes (4) und/oder eine gespeicherte Umkehrposition des Wischarmes (4) an die Fahrzeuggeschwindigkeit angepaßt wird.

2. Scheibenwischvorrichtung mit mindestens einem in seiner Drehrichtung änderbaren Elektromotor (2) und mindestens einem Wischarm (4), wobei eine Einrichtung (8) zur Erfassung der Motordrehzahl vorgesehen ist, der Motordrehzahl entsprechende Betriebssignale (11) einer Steuereinheit (7) zugeführt und mit einer Soll-Drehzahl verglichen werden und bei Unterschreiten der Soll-Drehzahl ein Abschalt- und/oder Reversiersignal zur Drehrichtungsumkehr als Schaltsignal (10) dem Elektromotor (2) zugeführt wird, **dadurch gekennzeichnet, daß** eine in der Steuereinheit (7) gespeicherte Parkposition des Wischarmes (4) und/oder eine gespeicherte Umkehrposition des Wischarmes (4) an die Fahrzeuggeschwindigkeit angepaßt wird.

3. Scheibenwischvorrichtung nach Anspruch 1, **dadurch gekennzeichnet, daß** das Schaltsignal (10) zum reversieren des Elektromotors (2) nach Ablauf einer bestimmten Zeitspanne (tb) erfolgt, in der die Betriebsdrehzahl unter die Minimaldrehzahl sinkt.

4. Scheibenwischvorrichtung nach einem oder mehreren der vorhergehenden Ansprüche, **dadurch gekennzeichnet, daß** die Steuereinheit (7) Blockierpositionen des Wischarmes (4) erfaßt und der Elektromotor (2) vor Erreichen der Blockierpositionen mit Hilfe von Schaltsignalen (10) reversiert wird.

5. Scheibenwischvorrichtung nach einem oder mehreren der vorhergehenden Ansprüche, **dadurch gekennzeichnet, daß** die Steuereinheit (7) Motordrehwinkelsignale als Betriebssignale (11) erfaßt, wobei dem Elektromotor (2) vor Erreichen von Drehwinkeln, welche einer Wischerendlage entsprechen, Drehgeschwindigkeitsänderungssignale als Schaltsignale (10) zugeführt werden und dadurch abbremst.

6. Scheibenwischvorrichtung nach einem oder mehreren der vorhergehenden Ansprüche, **dadurch gekennzeichnet, daß** zur Erfassung der Motordrehzahl und des Motordrehwinkels zumindest ein Sensor (5,6) nach Art eines Hall-Elementes vorgesehen ist.

7. Scheibenwischvorrichtung nach einem oder mehreren der vorhergehenden Ansprüche, **dadurch gekennzeichnet, daß** ein zusätzlicher Sensor (6') zur Überwachung der Parkstellung des Wischarmes (4) vorgesehen ist.

8. Scheibenwischvorrichtung nach einem oder mehreren der vorhergehenden Ansprüche, **dadurch gekennzeichnet, daß** eine Einrichtung (9) zur Motordrehrichtungsüberwachung vorgesehen ist und dem Elektromotor (2) in Abhängigkeit von der Motordrehrichtung ein Reversiersignal als Schaltsignal (10) zugeführt wird.

9. Scheibenwischvorrichtung nach einem oder mehreren der vorhergehenden Ansprüche, **dadurch gekennzeichnet, daß** der Steuereinheit (7) Fahrzeuggeschwindigkeitssignale als Betriebssignale (11) zugeführt werden und in Abhängigkeit von der Fahrzeuggeschwindigkeit unterschiedliche Umkehrpunkte (U, V) für den Wischarm (4) vorgesehen sind und entsprechende Reversiersignale als Schaltsignale (10) zur Drehrichtungsumkehr dem Elektromotor (2) zugeführt werden.

10. Scheibenwischvorrichtung nach Anspruch 1, **dadurch gekennzeichnet, daß** die Steuereinheit (7) mit einem zusätzlichen Regler versehen ist, wobei die Betriebsdrehzahl mit einer Solldrehzahl verglichen wird und bei Abweichungen von der Solldrehzahl ein Schaltsignal (10) zur Anpassung der Betriebsdrehzahl an die Solldrehzahl abgegeben wird.

## Claims

1. Windscreen wiper device with at least one electric motor (2) with a variable direction of rotation and at least one wiper arm (4), wherein a control unit (7) is provided for the load-dependent control of the electric motor (2), **characterised in that** a parking position of the wiper arm (4) stored in the control unit (7) and/or a stored reverse position of the wiper arm (4) is adapted to the vehicle speed.

2. Windscreen wiper device with at least one electric motor (2) with a variable direction of rotation and at least one wiper arm (4), wherein a device (8) for detecting the speed of the motor is provided, operating signals (11) corresponding to the speed of the motor are supplied to a control unit (7) and are compared with a desired speed and, if lower than the desired speed, a switching off and/or reversing signal for reversing the direction of rotation is supplied to the electric motor (2) as a switching signal (10), **characterised in that** a parking position of the wiper arm (4) stored in the control unit (7) and/or a stored reversal position of the wiper arm (4) is adapted to the vehicle speed.

3. Windscreen wiper device according to claim 1, **characterised in that** the switching signal (10) for reversing the electric motor (2) occurs after completion of a specific time interval (tb) in which the operating speed reduces to below the minimum speed.

4. Windscreen wiper device according to one or more of the preceding claims, **characterised in that** the control unit (7) detects blocking positions of the wiper arm (4) and the electric motor (2) is reversed with the aid of switching signals (10) before reaching the blocking positions.

5. Windscreen wiper device according to one or more of the preceding claims, **characterised in that** the control unit (7) detects motor angle of rotation signals as operating signals (11), speed of rotation changing signals (10) being supplied as switching signals to the electric motor (2) before reaching angles of rotation which correspond to a wiper end position, and thus decelerates.

6. Windscreen wiper device according to one or more of the preceding claims, **characterised in that** at least one sensor (5, 6) of a Hall element type is provided for detecting the motor speed and the motor angle of rotation.

7. Windscreen wiper device according to one or more of the preceding claims, **characterised in that** an additional sensor (6') is provided for monitoring the parking position of the wiper arm (4).

8. Windscreen wiper device according to one or more of the preceding claims, **characterised in that** a device (9) is provided for monitoring the motor direction of rotation and a reversing signal is supplied as a switching signal (10) to the electric motor (2) as a function of the motor direction of rotation.

9. Windscreen wiper device according to one or more of the preceding claims, **characterised in that** vehicle speed signals are supplied to the control unit (7) as operating signals (11) and different reversing points (U, V) for the wiper arm (4) are provided as a function of the vehicle speed and corresponding reversing signals are supplied as switching signals (10) to the electric motor (2) for the reversal of the direction of rotation.

10. Windscreen wiper device according to claim 1, **characterised in that** the control unit (7) is provided with an additional controller, the operating speed being compared with a desired speed and a switching signal (10) being output for adaptation of the operating speed to the desired speed in the event of deviations from the desired speed.

## Revendications

1. Dispositif d'essuie-glace comportant au moins un moteur électrique (2) dont le sens de rotation peut être inversé et au moins un balai d'essuie-glace (4), et une unité de commande (7) étant prévue pour commander le moteur électrique (2) en fonction de la charge, **caractérisé en ce qu'**une position de l'arrêt fixe du balai d'essuie-glace (4), mémorisée dans l'unité de commande (7), et/ou une position mémorisée d'inversion du sens de déplacement du balai d'essuie-glace (4) est adaptée à la vitesse du véhicule.

2. Dispositif d'essuie glace comportant au moins un moteur électrique (2) dont le sens de rotation peut être inversé et au moins un balai d'essuie-glace (4), et dans lequel il est prévu un dispositif (8) pour détecter la vitesse de rotation du moteur, dans lequel des signaux de fonctionnement (11) correspondant à la vitesse de rotation du moteur sont envoyés à une unité de commande (7) et sont comparés à une valeur de rotation de consigne et, lorsque la vitesse de rotation tombe au-dessous de la vitesse de rotation de consigne, un signal de débranchement et/ou d'inversion pour inverser le sens de rotation est envoyé en tant que signal de commutation (10) au moteur électrique (2), **caractérisé en ce qu'**une position d'arrêt fixe du balai d'essuie-glace (4), mémorisée dans l'unité de commande (7), et/ou une position mémorisée d'inversion du sens de déplacement du balai d'essuie-glace (4) est adaptée à la vitesse du véhicule.

3. Dispositif d'essuie-glace selon la revendication 1, **caractérisé en ce que** le signal de commutation (10) servant à inverser le sens de rotation du moteur électrique (2) est délivré au bout de l'écoulement d'un certain intervalle de temps (tb), pendant lequel la vitesse de rotation de fonctionnement tombe au-dessous de la vitesse de rotation minimale.

4. Dispositif d'essuie-glace selon une ou plusieurs des revendications précédentes, **caractérisé en ce que** l'unité de commande (7) détecte des positions de blocage du balai d'essuie-glace (4) et qu'avant que soient atteintes les positions de blocage, le sens de rotation du moteur électrique (2) est inversé à l'aide de signaux de commutation (10).

5. Dispositif d'essuie-glace selon une ou plusieurs des revendications précédentes, **caractérisé en ce que** l'unité de commande (7) détecte des signaux d'angle de rotation du moteur en tant que signaux de fonctionnement (11), des signaux de modification de la vitesse de rotation étant envoyés en tant que signaux de commutation (10) au moteur électrique (2) avant que soient atteints les angles de rotation qui correspondent à une position d'extrémité du balai d'essuie-glace, et freinant ainsi le moteur.

6. Dispositif d'essuie-glace selon l'une ou plusieurs des revendications précédentes, **caractérisé en ce que** pour la détection de la vitesse de rotation du moteur et de l'angle de rotation du moteur il est prévu au moins un capteur (5, 6) agencé à la manière d'un élément de Hall.

7. Dispositif d'essuie-glace selon une ou plusieurs des revendications précédentes, **caractérisé en ce qu'**il est prévu un capteur supplémentaire (6') pour contrôler la position d'arrêt fixe du balai d'essuie-glace (4).

8. Dispositif d'essuie-glace selon une ou plusieurs des revendications précédentes, **caractérisé en ce qu'**il est prévu un dispositif (9) pour contrôler le sens de rotation du moteur et qu'un signal d'inversion du sens de rotation est envoyé, en tant que signal de commutation (10), au moteur électrique (2) en fonction du sens de rotation du moteur.

9. Dispositif d'essuie-glace selon une ou plusieurs des revendications précédentes, **caractérisé en ce que** les signaux de vitesse du véhicule sont envoyés en tant que signal de fonctionnement (11) à l'unité de commande (7) et que différents points (U, V) d'inversion pour le bras d'essuie-glace (4) sont prévus en fonction de la vitesse du véhicule, et des signaux correspondants d'inversion du sens de rotation sont envoyés en tant que signaux de commutation (10) pour l'inversion du sens de rotation du moteur électrique (11).

10. Dispositif d'essuie-glace selon la revendication 1, **caractérisé en ce que** l'unité de commande (7) comporte un régulateur supplémentaire, la vitesse de rotation de fonctionnement étant comparée à une vitesse de rotation de consigne, et un signal de commutation (10) servant à adapter la vitesse de rotation du fonctionnement à la vitesse de rotation de consigne est délivré dans le cas d'écarts par rapport à la vitesse de rotation de consigne.
